# EUROPEAN PATENT APPLICATION

(11) **EP 4 456 267 A1**
(43) Date of publication of application: **30.10.2024**
(21) Application number: 22919507.8
(22) Date of filing: 14.01.2022
(51) Int. Cl.: H01M 50/103, H01M 50/593, H01M 10/058

(54) **BATTERY CELL AND MANUFACTURING METHOD THEREFOR, DEVICE, BATTERY, AND ELECTRIC APPARATUS**

(71) Applicant: Contemporary Amperex Technology Co., Limited, Ningde, Fujian 352100 (CN)
(72) Inventor: SHI, Shengyun, Ningde, Fujian 352100 (CN); GUO, Zhijun, Ningde, Fujian 352100 (CN)
(74) Representative: Gong, Jinping
(86) International application number: PCT/CN2022/072175
(87) International publication number: WO 2023/133859

(57) **Abstract**

A battery cell, a method and equipment for manufacturing same, a battery, and an electrical device are disclosed. The battery cell includes: a housing (110), an electrode assembly (120), a first insulator (130), a support assembly (140), and a second insulator (150). The housing (110) forms an accommodation cavity. The electrode assembly (120) is accommodated in the accommodation cavity. The electrode assembly (120) includes a first electrode plate, a second electrode plate, and a separator disposed between the first electrode plate and the second electrode plate. The first electrode plate and the second electrode plate are stacked along a first direction. A first insulator (130) includes a first insulation portion (131). The first insulation portion (131) is disposed on one side of the electrode assembly (10) and parallel to the first direction. The first insulation portion (131) includes a first channel (130a) that runs through the first insulation portion. The support assembly (140) is disposed on a side of the first insulation portion (131), the side being away from the electrode assembly (120). The support assembly (140) defines a second channel (140a) that communicates the first channel (130a) to the accommodation cavity. At least a part of the second channel (140a) is disposed opposite to the first channel (130a). At least a part of the second insulator (150) is disposed on a side of the support assembly (140) and covers the first channel (130a) and a part of the second channel (140a), the side being away from the first insulation portion (131).

## Description

### TECHNICAL FIELD

This application relates to the field of battery technology, and in particular, to a battery cell, a method and equipment for manufacturing same, a battery, and an electrical device.

### BACKGROUND

This section merely provides background information related to the present disclosure and is not necessarily prior art.

With the continuous update of battery technology and as impelled by the market, power batteries (power batteries with a metal housing, especially with a square housing, take a relatively high market share) are widely used in many fields such as new energy vehicles and electric tools.

During use of some batteries in the related art, an electrode assembly is prone to be short-circuited to the battery housing due to detachment of an active material or foreign matter, thereby causing corrosion inside the battery and impairing the capacity and lifespan of the battery.

### SUMMARY

Some embodiments of this application provide a battery cell, a method and equipment for manufacturing same, a battery, and an electrical device to alleviate the problem that corrosion occurring during use of the battery impairs the capacity and lifespan of the battery.

According to a first aspect, this application provides a battery cell, including: a housing, an electrode assembly, a first insulator, a support assembly, and a second insulator. The housing forms an accommodation cavity. The electrode assembly is accommodated in the accommodation cavity. The electrode assembly includes a first electrode plate, a second electrode plate, and a separator disposed between the first electrode plate and the second electrode plate. The first electrode plate and the second electrode plate are stacked along a first direction. A first insulator includes a first insulation portion. The first insulation portion is disposed on one side of the electrode assembly and parallel to the first direction. The first insulation portion includes a first channel that runs through the first insulation portion. The support assembly is disposed on a side of the first insulation portion, the side being away from the electrode assembly. The support assembly defines a second channel that communicates the first channel to the accommodation cavity. At least a part of the second channel is disposed opposite to the first channel. At least a part of the second insulator is disposed on a side of the support assembly and covers the first channel and a part of the second channel, the side being away from the first insulation portion.

In the technical solution of this application, the first insulation portion is disposed on a side of the electrode assembly, and the first insulation portion is parallel to a stacking direction of the first electrode plate and the second electrode plate of the electrode assembly. The support assembly defines the second channel that communicates the first channel to the accommodation cavity. At least a part of the second channel is disposed opposite to the first channel. At least a part of the second insulator covers the first channel and a part of the second channel. In this way, when an active material or a foreign matter is detached from the first electrode plate and/or the second electrode plate of the electrode assembly, the active material or foreign matter falls on the second insulator instead of falling directly on the housing after passing through the first channel and the second channel, thereby reducing the probability of short-circuits between the electrode assembly and the housing, alleviating the corrosion during use of the battery cell, and increasing the capacity and lifespan of the battery cell. In addition, the second insulator covers merely a part of the second channel. An electrolytic solution in the accommodation cavity can still infiltrate the electrode assembly through the second channel and the first channel to satisfy the infiltration requirement. Evidently, the battery cell of this application not only alleviates the corrosion during use of the battery cell, increases the capacity and lifespan of the battery cell, but also satisfies the infiltration requirement of the battery cell, and improves the production efficiency and yield rate of the battery cell.

In some embodiments, a dimension of the second channel is larger than a dimension of the first channel in a direction parallel to the first direction. By making the dimension of the second channel larger than the dimension of the first channel in the direction parallel to the first direction, the infiltration rate of the electrolytic solution for the electrode assembly can be increased, and the production efficiency and yield rate of the battery cell can be improved.

In some embodiments, the second channel completely covers the first channel. By making the dimension of the second channel larger than the dimension of the first channel in the direction parallel to the first direction and making the second channel completely cover the first channel, the infiltration rate of the electrolytic solution for the electrode assembly can be further increased, and the production efficiency and yield rate of the battery cell can be further improved.

In some embodiments, the support assembly includes a support piece. The second channel includes a conduit created on the support piece. At least a part of the conduit is disposed opposite to the first channel. By making the support assembly include a support piece, the assembling between the support assembly and the first insulator is facilitated. By creating a conduit on a support piece, the processing is simplified and the material cost is saved.

In some embodiments, the second channel further includes a first notch created on the support piece. The first notch communicates with the conduit. By creating the first notch on the support piece and letting the first notch communicate with the conduit, the dimension of the second channel can be increased. In addition, this enables the electrolytic solution to enter the conduit from different directions, thereby increasing the infiltration rate of the electrolytic solution for the electrode assembly and improving the production efficiency and yield rate of the battery cell.

In some embodiments, the support assembly includes at least two support pieces. The second channel is formed between the at least two support pieces. In this way, it is convenient for the electrolytic solution to enter the first channel from different directions, thereby increasing the infiltration rate of the electrolytic solution for the electrode assembly. In addition, the assembling between the support assembly and the first insulator is facilitated, the material cost and weight of the battery cell are reduced, and the production efficiency and yield rate of battery cell are improved.

In some embodiments, the support assembly includes two support pieces. The two support pieces are disposed apart on a side of the first insulation portion, the side being away from the electrode assembly. The second channel includes a second space defined between the two support pieces. At least a part of the second space is disposed opposite to the first channel. By making the support assembly include two support pieces and forming the first channel out of the second space defined between the two support pieces, the processing and assembling are simplified on the one hand. On the other hand, it is convenient for the electrolytic solution to enter the first channel from a plurality of directions, thereby increasing the infiltration rate of the electrolytic solution for the electrode assembly.

In some embodiments, the second channel further includes a second notch. The second notch is created on at least one of the two support pieces. The second notch communicates with the second space. By creating the second notch on at least one of the two support pieces, the dimension of the second channel formed between the two support pieces can be increased, the infiltration rate of the electrolytic solution for the electrode assembly can be increased, and in turn, the production efficiency and yield rate of the battery cell are improved.

In some embodiments, the two support pieces are distributed apart in parallel along the first direction; or, the two support pieces are distributed apart in parallel along a second direction, and the second direction is coplanar with and perpendicular to the first direction. This can increase the degree of freedom in assembling the support assembly, lower the requirement on the assembling between the support assembly and the first insulator, improve the assembling efficiency, and in turn, improve the production efficiency of the battery cell.

In some embodiments, the support assembly includes three support pieces disposed on a side of the first insulation portion, the side being away from the electrode assembly. The three support pieces are distributed apart from each other. The second channel includes a third space defined between every two adjacent support pieces. At least a part of each third space communicates with the first channel. By making the support assembly include three support pieces and letting the second channel include the second space defined between every two adjacent support pieces, it is convenient for the electrolytic solution to enter the first channel from a plurality of directions, thereby increasing the infiltration rate of the electrolytic solution for the electrode assembly and improving the production efficiency of the battery cell.

In some embodiments, the second channel further includes a third notch. The third notch is created on at least one of the three support pieces. The third notch communicates with the third space. By creating the third notch on at least one of the three support pieces, the dimension of the second channel formed between the three support pieces can be increased, the infiltration rate of the electrolytic solution for the electrode assembly can be increased, and in turn, the production efficiency and yield rate of the battery cell are improved.

In some embodiments, the three support pieces are distributed apart from and in parallel with each other along the first direction; or the three support pieces are distributed apart from and in parallel with each other along a second direction, and the second direction is coplanar with and perpendicular to the first direction. This can increase the degree of freedom in assembling the support assembly, lower the requirement on the assembling between the support assembly and the first insulator, improve the assembling efficiency, and in turn, improve the production efficiency of the battery cell.

In some embodiments, the support assembly includes four support pieces. The four support pieces are disposed apart along a periphery of the first insulation portion. The second channel includes a fourth space jointly defined by the four support pieces and a fifth space jointly defined by every two adjacent support pieces. At least a part of the fourth space is disposed opposite to the first channel, or at least a part of the fifth space is disposed opposite to the first channel. By making the support assembly include four support pieces and letting the second channel include the fourth space jointly defined by the four support pieces and the fifth space jointly defined by every two adjacent support pieces, it is convenient for the electrolytic solution to enter the first channel from more directions, thereby further increasing the infiltration rate of the electrolytic solution for the electrode assembly and improving the production efficiency of the battery cell.

In some embodiments, the support piece assumes a plate structure. This can reduce the space occupied by the support assembly in the housing, thereby increasing the capacity of the battery cell.

In some embodiments, the first insulator further includes a plurality of second insulation portions connected to the first insulation portion. The plurality of second insulation portions each are folded along a line of connection at which the second insulation portion is connected to the first insulation portion, and gather together with the first insulation portion to form a cylindrical structure opened at a top of the cylindrical structure. The cylindrical structure wraps around the electrode assembly. Two adjacent second insulation portions are butt-jointed to or overlap each other outside the electrode assembly. By disposing a plurality of second insulation portions connected to the first insulation portion, the probability of contact between the electrode assembly and the housing can be greatly reduced, and the safety of the battery cell can be improved.

In some embodiments, the first insulation portion and the second insulation portion are formed in one piece. This facilitates the assembling between the first insulator and the electrode assembly and improves the assembling efficiency.

In some embodiments, the second insulator includes a first part and a second part that are formed in one piece. The first part is disposed on a side of the support assembly and covers the first channel and a part of the second channel, the side being away from the first insulation portion. The second part covers a region of butt-joint or overlap between two adjacent second insulation portions outside the electrode assembly. By making the second insulator include the first part and the second part that are formed in one piece, and by letting the first part cover the first channel and a part of the second channel, the corrosion can be alleviated during use of the battery cell, and the capacity and lifespan of the battery cell can be increased. With the second part covering the region of butt-joint or overlap between the two adjacent second insulation portions outside the electrode assembly, the first insulator can be fixed more firmly to the outside of the electrode assembly, thereby improving the safety of the battery cell.

According to a second aspect, an embodiment of this application provides a battery, including the battery cell according to any one embodiment in the first aspect.

The battery according to this embodiment of this application includes the battery cell described in the first aspect. The first insulation portion of the battery cell is disposed on a side of the electrode assembly, and the first insulation portion is parallel to a stacking direction of the first electrode plate and the second electrode plate of the electrode assembly. The support assembly defines the second channel that communicates the first channel to the accommodation cavity. At least a part of the second channel is disposed opposite to the first channel. At least a part of the second insulator covers the first channel and a part of the second channel. In this way, when an active material or a foreign matter is detached from the first electrode plate and/or the second electrode plate of the electrode assembly, the active material or foreign matter falls on the second insulator instead of falling directly on the housing after passing through the first channel and the second channel, thereby reducing the probability of short-circuits between the electrode assembly and the housing, alleviating the corrosion during use of the battery cell, and increasing the capacity and lifespan of the battery cell. In addition, the second insulator covers merely a part of the second channel. An electrolytic solution in the accommodation cavity can still infiltrate the electrode assembly through the second channel and the first channel to satisfy the infiltration requirement. Evidently, the battery cell of this application not only alleviates the corrosion during use of the battery cell, increases the capacity and lifespan of the battery cell, but also satisfies the infiltration requirement of the battery cell, improves the production efficiency and yield rate of the battery cell, and in turn, increases the capacity and endurance time of the battery, and improves the production efficiency and yield rate of the battery.

According to a third aspect, an embodiment of this application provides an electrical device, including the battery cell according to any one embodiment in the first aspect.

The electrical device according to this embodiment of this application uses the battery cell in the first aspect as a power supply system. The first insulation portion of the battery cell is disposed on a side of the electrode assembly, and the first insulation portion is parallel to a stacking direction of the first electrode plate and the second electrode plate of the electrode assembly. The support assembly defines the second channel that communicates the first channel to the accommodation cavity. At least a part of the second channel is disposed opposite to the first channel. At least a part of the second insulator covers the first channel and a part of the second channel. In this way, when an active material or a foreign matter is detached from the first electrode plate and/or the second electrode plate of the electrode assembly, the active material or foreign matter falls on the second insulator instead of falling directly on the housing after passing through the first channel and the second channel, thereby reducing the probability of short-circuits between the electrode assembly and the housing, alleviating the corrosion during use of the battery cell, and increasing the capacity and lifespan of the battery cell. In addition, the second insulator covers merely a part of the second channel. An electrolytic solution in the accommodation cavity can still infiltrate the electrode assembly through the second channel and the first channel to satisfy the infiltration requirement. Evidently, the battery cell of this application not only alleviates the corrosion during use of the battery cell, increases the capacity and lifespan of the battery cell, but also satisfies the infiltration requirement of the battery cell, improves the production efficiency and yield rate of the battery cell, and in turn, increases the capacity and endurance time of the electrical device, and improves the production efficiency and yield rate of the battery cell.

According to a fourth aspect, an embodiment of this application provides a battery cell manufacturing method, including:
providing an electrode assembly, where the electrode assembly includes a first electrode plate, a second electrode plate, and a separator disposed between the first electrode plate and the second electrode plate, and the first electrode plate and the second electrode plate are stacked along a first direction;
providing a first insulator including a first insulation portion, where the first insulation portion is disposed on one side of the electrode assembly and parallel to the first direction, and the first insulation portion includes a first channel that runs through the first insulation portion;
providing a support assembly disposed on a side of the first insulation portion, the side being away from the electrode assembly, where the support assembly defines a second channel, and at least a part of the second channel is disposed opposite to the first channel;
providing a second insulator, where at least a part of the second insulator is disposed on a side of the support assembly and covers the first channel and a part of the second channel, the side being away from the first insulation portion; and
providing a housing, where the housing forms an accommodation cavity; the accommodation cavity accommodates an electrode assembly equipped with the first insulator, the support assembly, and the second insulator; and the second channel communicates the first channel to the accommodation cavity.

In the battery cell manufactured by the battery cell manufacturing method according to this embodiment of this application, the first insulation portion of the battery cell is disposed on a side of the electrode assembly, and the first insulation portion is parallel to a stacking direction of the first electrode plate and the second electrode plate of the electrode assembly. The support assembly defines the second channel that communicates the first channel to the accommodation cavity. At least a part of the second channel is disposed opposite to the first channel. At least a part of the second insulator covers the first channel and a part of the second channel. In this way, when an active material or a foreign matter is detached from the first electrode plate and/or the second electrode plate of the electrode assembly, the active material or foreign matter falls on the second insulator instead of falling directly on the housing after passing through the first channel and the second channel, thereby reducing the probability of short-circuits between the electrode assembly and the housing, alleviating the corrosion during use of the battery cell, and increasing the capacity and lifespan of the battery cell. In addition, the second insulator covers merely a part of the second channel. An electrolytic solution in the accommodation cavity can still infiltrate the electrode assembly through the second channel and the first channel to satisfy the infiltration requirement. Evidently, the battery cell manufactured by the battery cell manufacturing method according to this embodiment of this application not only alleviates the corrosion during use of the battery cell, increases the capacity and lifespan of the battery cell, but also satisfies the infiltration requirement of the battery cell, and improves the production efficiency and yield rate of the battery cell.

According to a fifth aspect, an embodiment of this application provides a piece of equipment for manufacturing a battery cell, including:
a first providing apparatus, configured to provide an electrode assembly, where the electrode assembly includes a first electrode plate, a second electrode plate, and a separator disposed between the first electrode plate and the second electrode plate, and the first electrode plate and the second electrode plate are stacked along a first direction;
a second providing apparatus, configured to provide a first insulator, where the first insulator includes a first insulation portion, and the first insulation portion includes a first channel that runs through the first insulation portion;
a third providing apparatus, configured to provide a support assembly;
a fourth providing apparatus, configured to provide a second insulator;
a fifth providing apparatus, configured to provide a housing, where the housing forms an accommodation space;
a first assembling apparatus, configured to dispose the first insulation portion on a side of the electrode assembly and make the first insulation portion parallel to the first direction; dispose the support assembly on a side of the first insulation portion, the side being away from the electrode assembly, where the support assembly defines a second channel, and at least a part of the second channel is disposed opposite to the first channel; and dispose at least a part of the second insulator on a side of the support assembly and make the at least part of the second insulator cover the first channel and a part of the second channel, the side being away from the first insulation portion; and
a second assembling apparatus, configured to let the accommodation cavity accommodate the electrode assembly equipped with the first insulator, the support assembly, and the second insulator, where the second channel communicates the first channel to the accommodation cavity.

In the battery cell manufactured by the battery cell manufacturing equipment according to this embodiment of this application, the first insulation portion of the battery cell is disposed on a side of the electrode assembly, and the first insulation portion is parallel to a stacking direction of the first electrode plate and the second electrode plate of the electrode assembly. The support assembly defines the second channel that communicates the first channel to the accommodation cavity. At least a part of the second channel is disposed opposite to the first channel. At least a part of the second insulator covers the first channel and a part of the second channel. In this way, when an active material or a foreign matter is detached from the first electrode plate and/or the second electrode plate of the electrode assembly, the active material or foreign matter falls on the second insulator instead of falling directly on the housing after passing through the first channel and the second channel, thereby reducing the probability of short-circuits between the electrode assembly and the housing, alleviating the corrosion during use of the battery cell, and increasing the capacity and lifespan of the battery cell. In addition, the second insulator covers merely a part of the second channel. An electrolytic solution in the accommodation cavity can still infiltrate the electrode assembly through the second channel and the first channel to satisfy the infiltration requirement. Evidently, the battery cell manufactured by the battery cell manufacturing equipment according to this embodiment of this application not only alleviates the corrosion during use of the battery cell, increases the capacity and lifespan of the battery cell, but also satisfies the infiltration requirement of the battery cell, and improves the production efficiency and yield rate of the battery cell.

### BRIEF DESCRIPTION OF DRAWINGS

To describe the technical solutions in the embodiments of the present disclosure or the prior art more clearly, the following outlines the drawings to be used in the embodiments of this application or the prior art. Evidently, the drawings outlined below are merely about some embodiments of present disclosure, and a person of ordinary skill in the art may derive other embodiments from the drawings.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery cell according to some embodiments of this application;
FIG. 4 is a schematic exploded view of a battery cell according to some embodiments of this application;
FIG. 5 is a schematic structural bottom view of a battery cell according to some embodiments of this application;
FIG. 6 is a schematic structural diagram of one support piece disposed at a first insulation portion according to some embodiments of this application;
FIG. 7 is a schematic structural diagram of one support piece disposed at a first insulation portion according to some other embodiments of this application;
FIG. 8 is a schematic exploded view of a battery cell according to some embodiments of this application (two support pieces are distributed apart along a first direction X);
FIG. 9 is a schematic structural bottom view of a battery cell according to some embodiments of this application (two support pieces are distributed apart along a first direction X);
FIG. 10 is a schematic structural diagram of two support pieces disposed at a first insulation portion according to some embodiments of this application (the two support pieces are distributed apart along a first direction X);
FIG. 11 is a schematic exploded view of a battery cell according to some embodiments of this application (two support pieces are distributed apart along a second direction Y);
FIG. 12 is a schematic structural bottom view of a battery cell according to some embodiments of this application (two support pieces are distributed apart along a second direction Y);
FIG. 13 is a schematic structural diagram of two support pieces disposed at a first insulation portion according to some embodiments of this application (the two support pieces are distributed apart along a second direction Y);
FIG. 14 is a schematic exploded view of a battery cell according to some embodiments of this application (the support assembly includes three support pieces);
FIG. 15 is a schematic structural bottom view of a battery cell according to some embodiments of this application (the support assembly includes three support pieces);
FIG. 16 is a schematic structural diagram of three support pieces disposed at a first insulation portion according to some embodiments of this application;
FIG. 17 is a schematic structural diagram of three support pieces disposed at a first insulation portion according to some other embodiments of this application;
FIG. 18 is a schematic exploded view of a battery cell according to some embodiments of this application (the support assembly includes four support pieces);
FIG. 19 is a schematic structural bottom view of a battery cell according to some embodiments of this application (the support assembly includes four support pieces);
FIG. 20 is a schematic structural diagram of four support pieces disposed at a first insulation portion according to some embodiments of this application;
FIG. 21 is a schematic exploded view of a battery cell according to some other embodiments of this application (the support assembly includes four support pieces);
FIG. 22 is a schematic structural bottom view of a battery cell according to some other embodiments of this application (the support assembly includes four support pieces);
FIG. 23 is a schematic structural diagram of four support pieces disposed at a first insulation portion according to some other embodiments of this application;
FIG. 24 is a block flowchart of a method for manufacturing a battery cell according to some embodiments of this application; and
FIG. 25 is a block flowchart of equipment for manufacturing a battery cell according to some embodiments of this application.

### List of reference numerals:

electrical device 10
battery 11, controller 12, motor 13;
box 111, upper cover 1111, box shell 1112;
battery cell 100;
housing 110, electrode assembly 120, first insulator 130, first channel 130a, support assembly 140, second channel 140a, second insulator 150;
first insulation portion 131, second insulation portion 132;
support piece 141;
second space 140a-1, third space 140a-2, fourth space 140a-3, a fifth space 140a-4;
conduit 1411, first notch 1412, second notch 1413, third notch 1414;
first part 151, second part 152;
first direction X, second direction Y.

### DETAILED DESCRIPTION OF EMBODIMENTS

The following describes exemplary embodiments of the present disclosure in more detail with reference to drawings. Understandably, although the exemplary embodiments of the present disclosure are shown in the drawings, the present disclosure may be implemented in various forms, without being limited to the embodiments expounded herein. Such embodiments are provided to enable a more thorough understanding of the present disclosure and to fully convey the scope of the present disclosure to a person skilled in the art.

Understandably, the terms used herein are intended for the sole purpose of describing a particular exemplary embodiment rather than imposing any limitation. Unless otherwise expressly specified in the context, a singular noun preceded by "a", "an", or "the" as used herein is also intended to include the plural form thereof. The terms "include", "comprise", "contain", and "possess" are inclusive and thereby indicate the presence of the stated feature, step, operation, element and/or component but without excluding the presence or addition of one or more other features, steps, operations, elements, components, and/or any combination thereof. Unless an implementation order is expressly specified, the method steps, processes, and operations described herein are not to be construed as being necessarily performed in the particular order depicted or described. Further, understandably, additional or alternative steps may be used.

Although the terms such as first, second, and third may be used herein to describe a plurality of elements, components, regions, layers and/or sections, such elements, components, regions, layers and/or sections are not limited by the terms. Such terms may be intended for the sole purpose of distinguishing one element, component, region, layer or section from another region, layer, or section. Unless otherwise expressly specified in the context, the terms such as "first" and "second" and other numerical terms as used herein do not imply a sequence or order. Therefore, a first element, component, region, layer or section to be discussed below may be referred to as a second element, component, region, layer or section without departing from the teachings of an exemplary embodiment.

For ease of description, a spatial relative relationship term such as "in", "out", "inside", "outside", "under", "below", "on", or "above" may be used herein to describe a relationship between one element or feature and another element or feature shown in the drawing. Such spatial relative relationship terms are intended to include an orientation of the apparatus in use or operation different from the orientation depicted in the drawing. For example, when the apparatus in the drawing is turned over, an element described as being "under another element or feature" or "below another element or feature" will thereupon be positioned or oriented "on another element or feature" or "above another element or feature". Therefore, the exemplary term "below..." may include two orientations: "above..." and "below...". The apparatus may be otherwise oriented, for example, rotated 90 degrees or in another direction, and a descriptor used herein for representing a spatial relative relationship is interpreted accordingly.

With the continuous update of battery technology and as impelled by the market, power batteries are applied more extensively. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

In the related art, a power battery includes a housing, an electrode assembly, a current collecting plate, and a top cover. Power batteries are classified into two main types depending on the shell: prismatic or cylindrical lithium-ion batteries with a metal shell, and pouch-type batteries with an aluminum-plastic composite film shell. Power batteries with a metal housing (especially with a square housing) take a relatively high market share. A typical way to prevent a short circuit caused by the contact between the electrode assembly and the housing of a power battery is to place a dielectric film between the electrode assembly and the housing. The housing of the power battery is usually in the shape of a container opened at one end. An R angle is formed on an inner surface of the housing at a joint between the bottom and the sidewall of the housing due to manufacturing factors such as processing and molding. To avoid interference between the electrode assembly and the inner R angle at the bottom of the housing during the assembling, a pallet is disposed between the bottom of the electrode assembly wrapped with the dielectric film and the housing, so as to lift the electrode assembly and avoid the housing.

The inventor hereof is aware that the dielectric film in the power battery is generally used in conjunction with the pallet. Corresponding through-holes are created on the dielectric film and the pallet to facilitate positioning during assembling and facilitate electrolyte infiltration. However, this brings another risk: an active material or foreign matter is prone to be detached from an electrode plate of the electrode assembly and run through the through-hole on the separator and the pallet, thereby resulting in a short circuit between the electrode assembly and the housing. This forms an internal electrolytic cell to corrode metal parts such as an aluminum shell on the one hand, and reduces the capacity of the battery cell and shortens the lifespan of the battery cell on the other hand.

In view of the above problems, the inventor has designed a battery cell after in-depth research. The battery cell includes a housing, an electrode assembly, a first insulator, a support assembly, and a second insulator. The electrode assembly is accommodated in an accommodation cavity of the housing. The first insulation portion is disposed on a side of the electrode assembly and parallel to a first direction. The first direction is a stacking direction of the first electrode plate and the second electrode plate of the electrode assembly. The first insulation portion includes a first channel that runs through the first insulation portion. The support assembly is disposed on a side of the first insulation portion, the side being away from the electrode assembly. The support assembly defines a second channel that communicates the first channel to the accommodation cavity. At least a part of the second channel is disposed opposite to the first channel. At least a part of the second insulator is disposed on a side of the support assembly and covers the first channel and a part of the second channel, the side being away from the first insulation portion.

In such a battery cell, the first insulation portion is disposed on a side of the electrode assembly, and the first insulation portion is parallel to the stacking direction of the first electrode plate and the second electrode plate of the electrode assembly. The second channel defined by the support assembly communicates the first channel to the accommodation cavity. At least a part of the second channel is disposed opposite to the first channel. At least a part of the second insulator covers the first channel and a part of the second channel. In this way, when an active material or a foreign matter is detached from the first electrode plate and/or the second electrode plate, the active material or foreign matter falls on the second insulator instead of falling directly on the housing after passing through the first channel and the second channel, thereby reducing the probability of short-circuits between the electrode assembly and the housing, alleviating the corrosion during use of the battery cell, and increasing the capacity and lifespan of the battery cell.

The battery cell disclosed in this embodiment of this application is applicable to a battery and an electrical device, so that the battery and the electrical device achieve a relatively high capacity and relatively long lifespan.

The battery according to this embodiment of this application is applicable to, but is not limited to the use in, electrical devices such as a vehicle, watercraft, or aircraft. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, an electrical device 10 according to some embodiments of this application is used as an example.

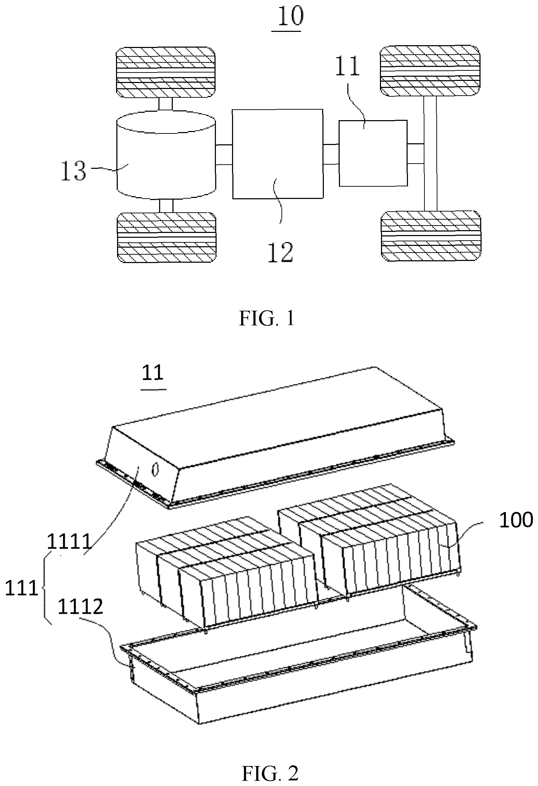

FIG. 1 is a schematic structural diagram of a vehicle 10 according to some embodiments of this application. The vehicle 10 may be an oil-fueled vehicle, a natural gas vehicle, or a new energy vehicle. The new energy vehicle may be a battery electric vehicle, a hybrid electric vehicle, a range-extended electric vehicle, or the like. A battery 11, a controller 12, and a motor 13 may be disposed inside the vehicle 10. The controller 12 is configured to control the battery 11 to supply power to the motor 13. For example, the battery 11 may be disposed at the bottom, front, or rear of the vehicle 10. The battery 11 may be configured to supply power to the vehicle 10. For example, the battery 11 may serve as an operating power supply of the vehicle 10 to power a circuit system of the vehicle 10. For example, the battery may be configured to meet operating power usage requirements of the vehicle 10 that is being started or navigated or running.

In another embodiment of this application, the battery 11 serves not only as an operating power supply of the vehicle 10, but may also serve as a driving power supply of the vehicle 10 to provide driving power for the vehicle 10 in place of or partly in place of fuel oil or natural gas.

FIG. 2 is an exploded view of a battery 11 according to some embodiments of this application. The battery 11 referred to herein means a unitary physical module that includes one or more battery cells 100 to provide a higher voltage and a higher capacity. For example, batteries 11 referred to in this application may include a battery module, a battery pack, and the like. A battery 11 typically includes a box 111 configured to package one or more battery cells 100. The box 111 prevents liquid or other foreign matters from affecting the charging or discharging of the battery cell 100. Specifically, the box 111 may include an upper cover 1111 and a box shell 1112. The upper cover 1111 and the box shell 1112 are snap-fitted together. The shapes of the upper cover 1111 and the box shell 1112 may depend on the shape of a combination of the plurality of battery cells 100.

The battery 11 may contain a plurality of battery cells 100. The plurality of battery cells 100 may be connected in series, parallel, or series-and-parallel pattern. The series-and-parallel pattern means a combination of series connection and parallel connection of the plurality of battery cells 100. The plurality of battery cells 100 may be directly connected in series, parallel, or series-and-parallel pattern, and then the whole of the plurality of battery cells 100 may be accommodated in the box 111. Alternatively, the plurality of battery cells 100 may be connected in series, parallel, or series-and-parallel pattern to form a battery 11 in the form of battery modules first. A plurality of battery modules are then connected in series, parallel, or series-and-parallel pattern to form a whole for being accommodated in the box 111. The battery 11 may further include other structures. For example, the battery 11 may further include a busbar component. The busbar component is configured to implement electrical connection between the plurality of battery cells 100.

In this application, a battery cell 100 may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell 100 may be in a cylindrical shape, a flat shape, a cuboidal shape, or other shapes, without being limited herein. Depending on the form of packaging, the battery cells 100 are typically classed into three types: cylindrical battery cell, prismatic battery cell, and pouch-type battery cell. The type of the battery cell is not limited in an embodiment of this application.

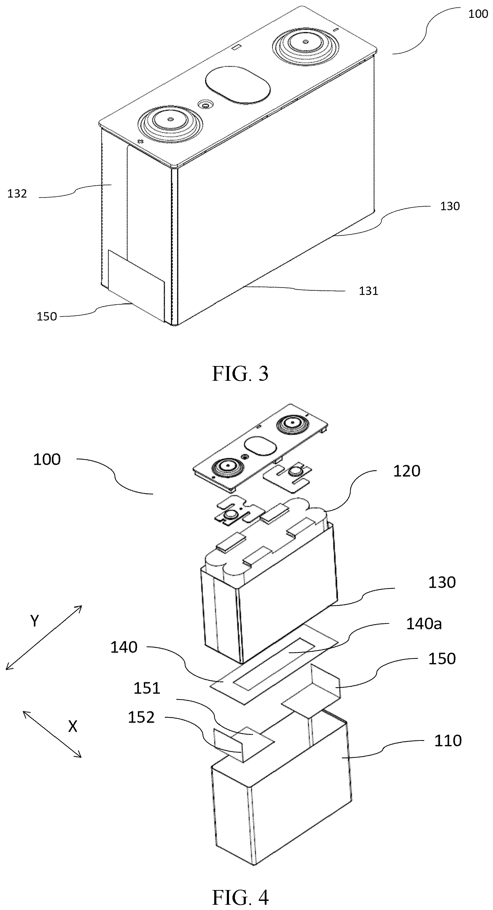

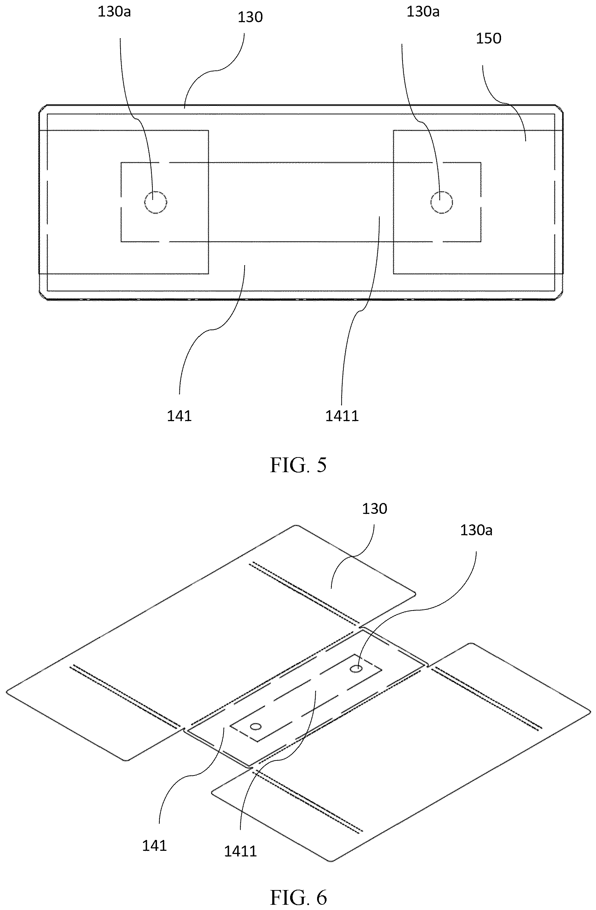

As shown in FIG. 3 to FIG. 6, an embodiment in a first aspect of this application provides a battery cell 100, including: a housing 110, an electrode assembly 120, a first insulator 130, a support assembly 140, and a second insulator 150. The housing 110 forms an accommodation cavity. The electrode assembly 120 is accommodated in the accommodation cavity. The electrode assembly 120 includes a first electrode plate, a second electrode plate, and a separator disposed between the first electrode plate and the second electrode plate. The first electrode plate and the second electrode plate are stacked along a first direction. A first insulator 130 includes a first insulation portion 131. The first insulation portion 131 is disposed on one side of the electrode assembly 120 and parallel to the first direction. The first insulation portion 131 includes a first channel 130a that runs through the first insulation portion 131. The support assembly 140 is disposed on a side of the first insulation portion 131, the side being away from the electrode assembly 120. The support assembly 140 defines a second channel 140a that communicates the first channel 130a to the accommodation cavity. At least a part of the second channel 140a is disposed opposite to the first channel 130a. At least a part of the second insulator 150 is disposed on a side of the support assembly 140 and covers the first channel 130a and a part of the second channel 140a, the side being away from the first insulation portion 131.

The housing 110 is a component configured to fit the end cap to form an internal environment of the battery cell 100. The formed internal environment may be used to accommodate the electrode assembly 120, an electrolytic solution, and other components. The housing 110 and the end cap may be stand-alone components. An opening may be created on the housing 110. At the opening, the end cap fits the opening to form the internal environment of the battery cell 100. Without limitation, the end cap and the housing 110 may be integrated instead. Specifically, the end cap and the housing 110 may form a common connection face before other components are put into the housing. Subsequently, when the housing 110 needs to be sealed internally, the end cap is made to fit the housing 110. The housing 110 may be in various shapes and sizes, such as a cuboid, cylinder, or hexagonal prism. Specifically, the shape of the housing 110 may depend on the specific shape and size of the electrode assembly 120. The housing 110 may be made of a variety of materials such as copper, iron, aluminum, stainless steel, aluminum alloy, or plastic, without being particularly limited herein.

The electrode assembly 120 is a component that reacts electrochemically in the battery cell 100. The electrode assembly 120 may be a jelly-roll type electrode assembly. The first electrode plate and the second electrode plate are stacked and then wound to form a flat structure. The electrode assembly 120 includes a flat straight region and corner regions located at two ends of the flat straight region. In this case, "the first electrode plate and the second electrode plate are stacked along the first direction" means a stacking direction of the first electrode plate and the second electrode plate located in the flat straight region. Alternatively, the electrode assembly 120 may be a stacked-type electrode assembly formed by stacking a plurality of first electrode plates and at least one second electrode plate. In this case, "the first electrode plate and the second electrode plate are stacked along the first direction" means a stacking direction of the plurality of first electrode plates. The first direction is a stacking direction of the first electrode plate and the second electrode plate.

The first electrode plate is a positive electrode plate, and the second electrode plate is a negative electrode plate. Alternatively, the first electrode plate is a negative electrode plate, and the second electrode plate is a positive electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab. The positive tab and the negative tab may be located at one end of the body portion together or at two ends of the body portion respectively. In a charge-and-discharge process of the battery, the positive active material and the negative active material react with an electrolytic solution. The tabs are connected to electrode terminals to form a current circuit.

The first insulator 130 means an insulating structure configured to isolate the electrode assembly 120 from the housing 110, and may be a sheet structure.

The first insulation portion 131 means an insulating structure disposed on a side of the electrode assembly 120 and parallel to the stacking direction of the first electrode plate and the second electrode plate of the electrode assembly 120, and is configured to isolate the electrode assembly 120 from the housing 110 to reduce the probability of a short circuit between the electrode assembly 120 and the housing 110. The first insulation portion 131 may be a part of the first insulator 130 and may be in a sheet structure.

The first channel 130a is an opening or through-hole created on the first insulation portion 131 to facilitate the electrolytic solution to infiltrate the electrode assembly 120. The number of openings or through-holes may be set as required.

The support assembly 140 is a component configured to avoid interference between the electrode assembly 120 and the housing 110 during assembling, and may be integrally formed or discrete. The support assembly may assume a block structure or a plate structure, and preferably a plate structure.

The second channel 140a means a through-structure configured to communicate the first channel 130a of the first insulation portion 131 to the accommodation cavity. If the support assembly 140 is integrally formed, the second channel 140a may be a groove structure that runs through the support assembly 140. For example, the support assembly 140 is an integrated plate structure, and the second channel 140a may be a groove body that runs through the plate structure in the thickness direction. If the support assembly 140 is discrete, the second channel 140a may be a space structure defined by the support assembly 140. For example, the support assembly 140 is formed of a plurality of plate structures. The plurality of plate structures are spaced apart, and the space defined between the plurality of plate structures is the second channel 140a.

The second insulator 150 is an insulating structure at least a part of which is disposed on a side of the support assembly 140, the side being away from the first insulation portion 131. This part of the insulating structure covers the first channel 130a and a part of the second channel 140a. In this way, the interior of the electrode assembly 120 does not straightly communicate with the accommodation cavity of the housing. In other words, the detached active materials or other foreign matters fall on at least a part of the second insulator 150 rather than directly fall on the housing 110 through the first channel 130a and the second channel 140a, thereby reducing the probability of a short circuit between the electrode assembly 120 and the housing 110, alleviating the corrosion during use of the battery cell, and increasing the capacity and lifespan of the battery cell. In addition, the electrolytic solution can still infiltrate the electrode assembly 120 through the second channel 140a and the first channel 130a to satisfy the infiltration requirement. The second insulator 150 may be a sheet structure coated with a binder on one side, for example, may be insulating tape, so as to facilitate fixing of the second insulator 150 onto a side of the support assembly 140, the side being away from the first insulation portion 131.

The support assembly 140 defines the second channel 140a that communicates the first channel 130a to the accommodation cavity. The "accommodation cavity" here may be understood as a part of the accommodation cavity located between the first insulator 130 or the second insulator 150 and the housing 110.

In the technical solution of this application, the first insulation portion 131 is disposed on a side of the electrode assembly 120, and the first insulation portion 131 is parallel to a stacking direction of the first electrode plate and the second electrode plate of the electrode assembly 130. The support assembly 140 defines the second channel 140a that communicates the first channel 130a to the accommodation cavity. At least a part of the second channel 140a is disposed opposite to the first channel 130a. At least a part of the second insulator 152 covers the first channel 130a and a part of the second channel 140a. In this way, when an active material or a foreign matter is detached from the first electrode plate and/or the second electrode plate of the electrode assembly 130, the active material or foreign matter falls on the second insulator 150 instead of falling directly on the housing 110 after passing through the first channel 130a and the second channel 140a, thereby reducing the probability of short-circuits between the electrode assembly 120 and the housing 110, alleviating the corrosion during use of the battery cell 100, and increasing the capacity and lifespan of the battery cell 100. In addition, the second insulator 152 covers merely a part of the second channel 140a. An electrolytic solution in the accommodation cavity can still infiltrate the electrode assembly 120 through the second channel 140a and the first channel 130a to satisfy the infiltration requirement. Evidently, the battery cell 100 of this application not only alleviates the corrosion during use of the battery cell 100, increases the capacity and lifespan of the battery cell 100, but also satisfies the infiltration requirement of the battery cell, and improves the production efficiency and yield rate of the battery cell.

In some embodiments of this application, a dimension of the second channel 140a is larger than a dimension of the first channel 130a in a direction parallel to the first direction.

By making the dimension of the second channel 140a larger than the dimension of the first channel 130a in the direction parallel to the first direction, the infiltration rate of the electrolytic solution for the electrode assembly 120 can be increased, and the production efficiency and yield rate of the battery cell 100 can be improved.

In some embodiments of this application, the second channel 140a completely covers the first channel 130a.

By making the dimension of the second channel 140a larger than the dimension of the first channel 130a in the direction parallel to the first direction and making the second channel 140a completely cover the first channel 130a, the infiltration rate of the electrolytic solution for the electrode assembly 120 can be further increased, and the production efficiency and yield rate of the battery cell 100 can be further improved.

In some embodiments of this application, as shown in FIG. 4, the support assembly 140 includes a support piece 141. The second channel 140a includes a conduit 1411 created on the support piece 141. At least a part of the conduit 1411 is disposed opposite to the first channel 130a.

The support piece 141 means a structural member disposed on a side of the first insulation portion 131, the side being away from the electrode assembly 120, so as to avoid interference between the electrode assembly 120 and the housing 110 during assembling. The support piece may assume a block structure or a plate structure, and preferably a plate structure to improve the space efficiency.

The conduit 1411 means a groove structure created in the support piece 141 and running through the support piece 141. For example, the support piece 141 assumes a plate structure. The conduit 1411 is a groove structure created in the plate structure and running through the plate structure along the thickness direction of the plate structure.

By making the support assembly 140 include a support piece 141, the assembling between the support assembly 140 and the first insulator 130 is facilitated. By creating a conduit 1411 on a support piece 141, the processing is simplified and the material cost is saved.

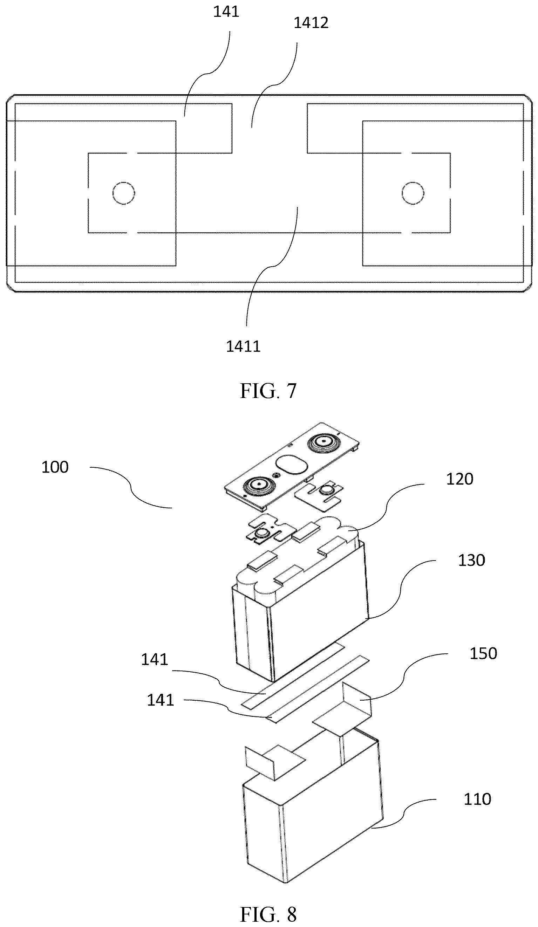

In some embodiments of this application, as shown in FIG. 7, the second channel 140a further includes a first notch 1412 created on the support piece 141. The first notch 1412 communicates with the conduit 1411.

The first notch 1412 may be understood as a yawning gap structure running through the support piece 141 and communicating an outer edge of the support piece 141 to a wall of the conduit 1411.

By creating the first notch 1412 on the support piece 141 and letting the first notch communicate with the conduit 1411, the dimension of the second channel 140a can be increased. In addition, this enables the electrolytic solution to enter the conduit 1411 from different directions, thereby increasing the infiltration rate of the electrolytic solution for the electrode assembly 120 and improving the production efficiency and yield rate of the battery cell 100.

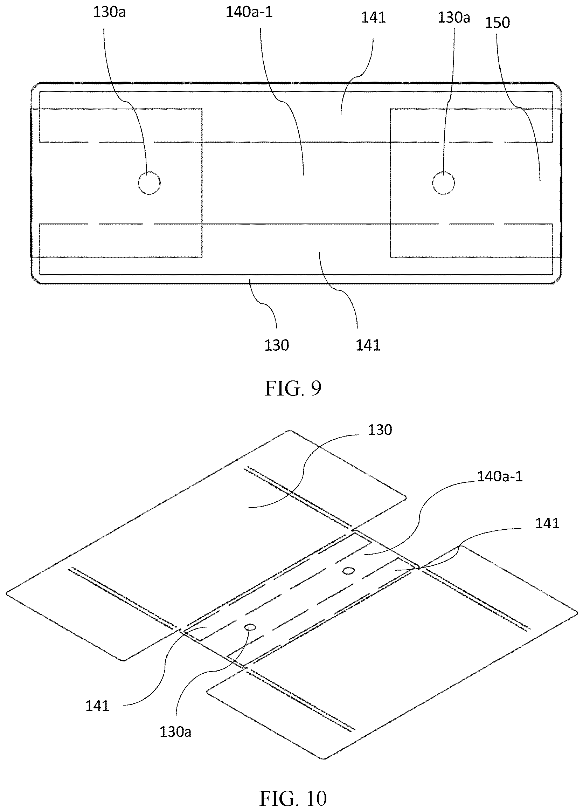

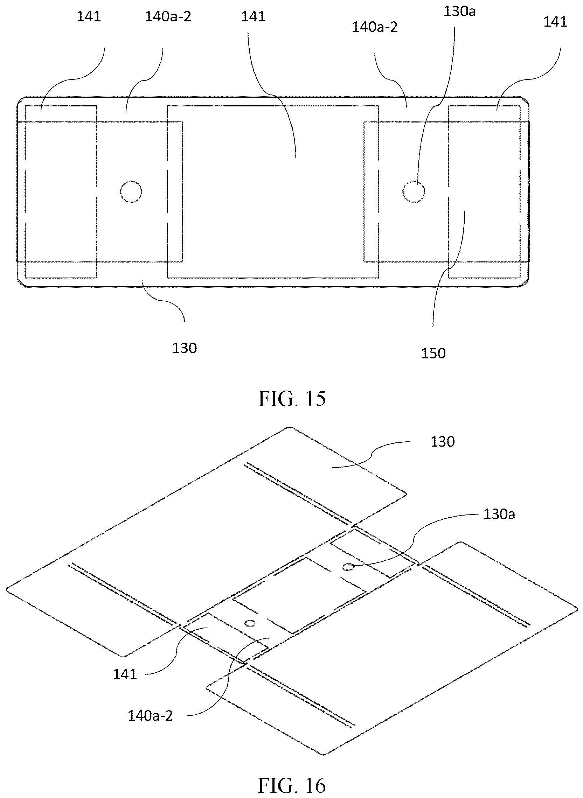

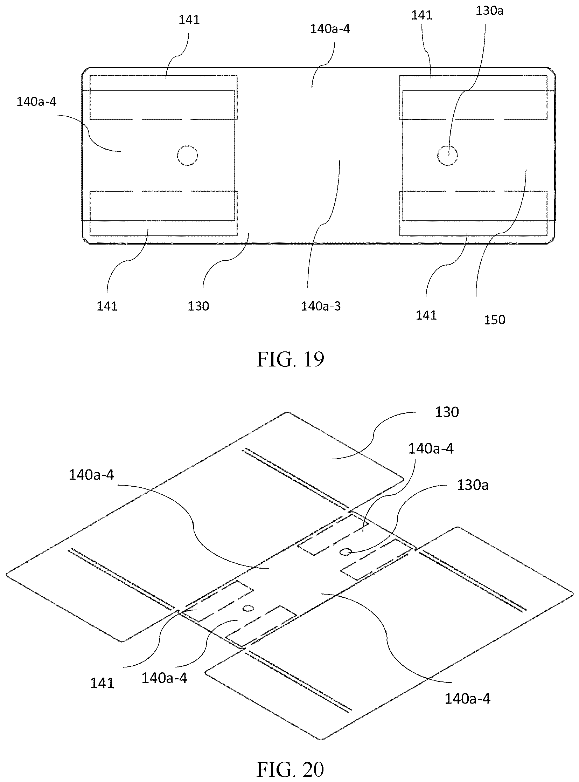

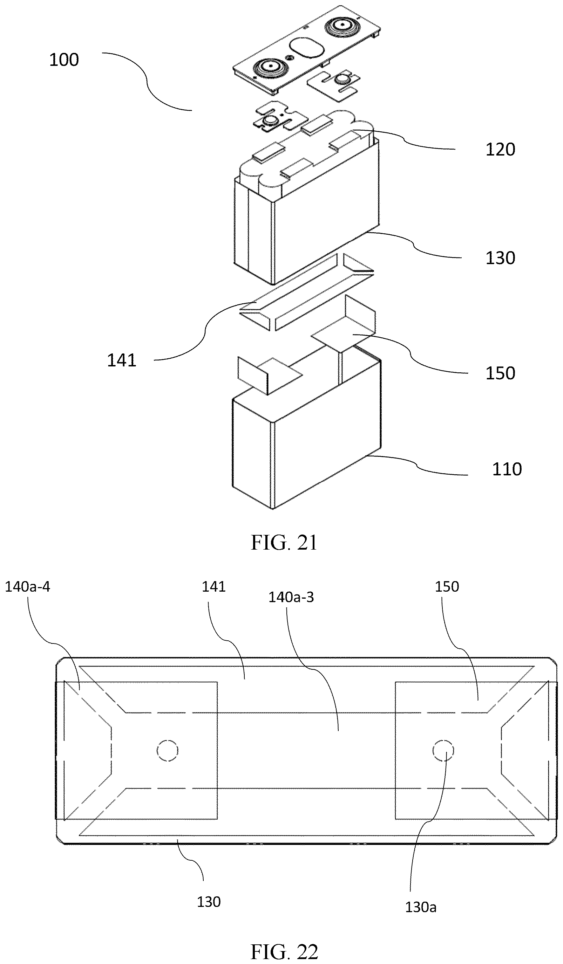

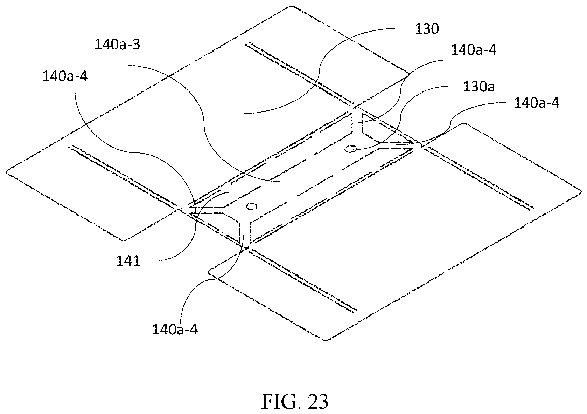

In some embodiments of this application, as shown in FIG. 8 to FIG. 23, the support assembly 140 includes at least two support pieces 141. The second channel 140a is formed between the at least two support pieces 141.

In this way, it is convenient for the electrolytic solution to enter the first channel 130a from different directions, thereby increasing the infiltration rate of the electrolytic solution for the electrode assembly 120. In addition, the assembling between the support assembly 140 and the first insulator 130 is facilitated, the material cost and weight of the battery cell 100 are reduced, and the production efficiency and yield rate of battery cell 100 are improved.

In some embodiments of this application, as shown in FIG. 8 to FIG. 13, the support assembly 140 includes two support pieces 141. The two support pieces 141 are disposed apart on a side of the first insulation portion 131, the side being away from the electrode assembly 120. The second channel 140a includes a second space 140a-1 defined between the two support pieces 141. At least a part of the second space 140a-1 is disposed opposite to the first channel 130a.

The second space 140a-1 means a space located between the two support pieces 141 and between two opposite edges.

By making the support assembly 140 include two support pieces 141 and forming the first channel 140a out of the second space 140a-1 defined between the two support pieces 141, the processing and assembling are simplified on the one hand. On the other hand, it is convenient for the electrolytic solution to enter the first channel 130a from a plurality of directions, thereby increasing the infiltration rate of the electrolytic solution for the electrode assembly 120.

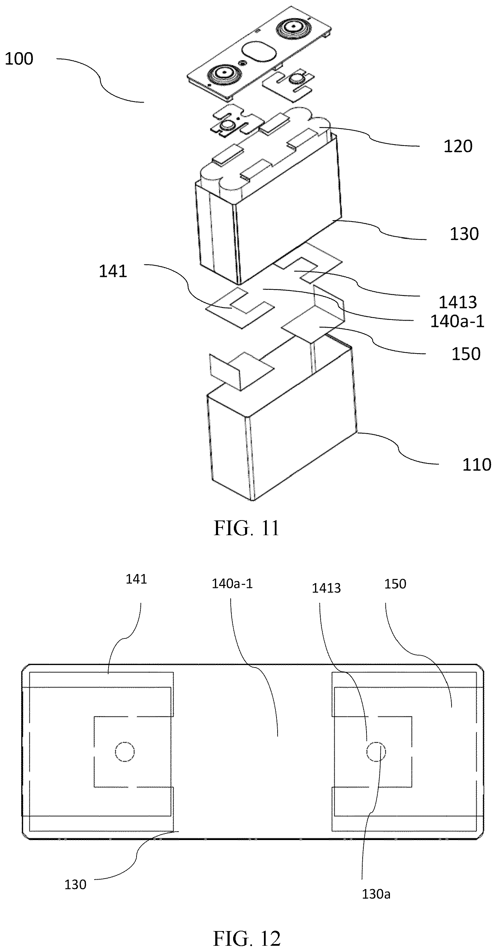

In some embodiments of this application, as shown in FIG. 11 to FIG. 13, the second channel 140a further includes a second notch 1413. The second notch 1413 is created on at least one of the two support pieces 141. The second notch 1413 communicates with the second space 140a-1.

The second notch 1413 may be understood as a yawning gap structure running through the support piece 141 and created on one outer edge of the support piece 141.

By creating the second notch 1413 on at least one of the two support pieces 141, the dimension of the second channel 140a formed between the two support pieces 141 can be increased, the infiltration rate of the electrolytic solution for the electrode assembly 120 can be increased, and in turn, the production efficiency and yield rate of the battery cell 100 are improved.

In some embodiments of this application, as shown in FIG. 8 to FIG. 13, the two support pieces 141 are distributed apart in parallel along the first direction; or, the two support pieces 141 are distributed apart in parallel along a second direction. The second direction is coplanar with and perpendicular to the first direction.

This can increase the degree of freedom in assembling the support assembly 140, lower the requirement on the assembling between the support assembly 140 and the first insulator 130, improve the assembling efficiency, and in turn, improve the production efficiency of the battery cell 100.

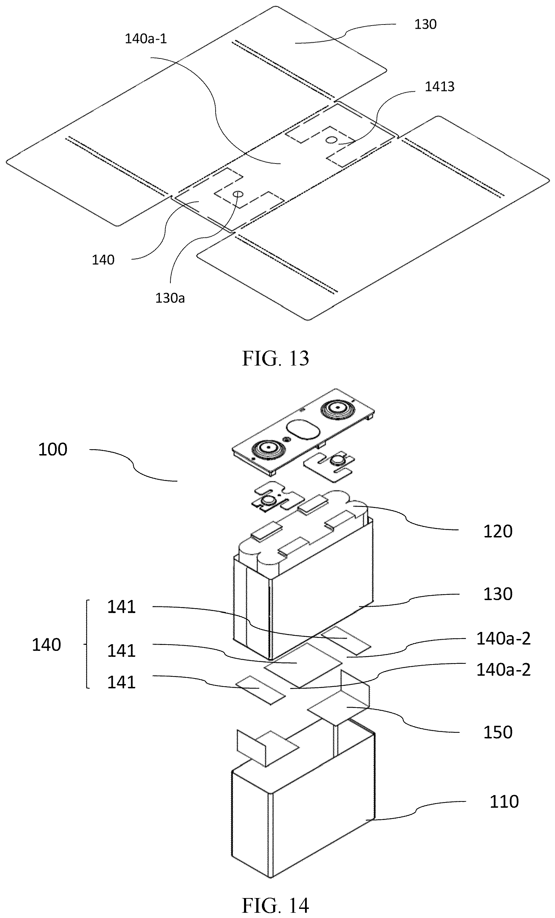

In some embodiments of this application, as shown in FIG. 14 to FIG. 16, the support assembly 140 includes three support pieces 141. The three support pieces are disposed on a side of the first insulation portion 131, the side being away from the electrode assembly 120. The three support pieces 141 are distributed apart from each other. The second channel 140a includes a third space 140a-2 defined between every two adjacent support pieces 141. At least a part of each third space 140a-2 communicates with the first channel 130a.

The third space 140a-2 means a space located between every two adjacent support pieces 141 and between two opposite edges.

By making the support assembly 140 include three support pieces 141 and letting the second channel 140a include the third space 140a-2 defined between every two adjacent support pieces 141, it is convenient for the electrolytic solution to enter the first channel 130a from a plurality of directions, thereby increasing the infiltration rate of the electrolytic solution for the electrode assembly 120 and improving the production efficiency of the battery cell 100.

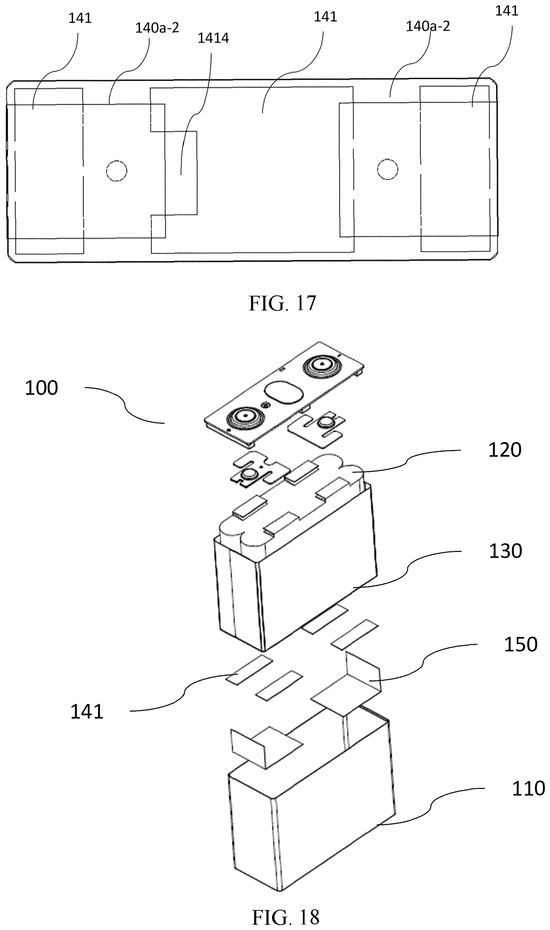

In some embodiments of this application, as shown in FIG. 17, the second channel 140a further includes a third notch 1414. The third notch 1414 is created on at least one of the three support pieces 141. The third notch 1414 communicates with the third space 140a-2.

The third notch 1414 may be understood as a yawning gap structure running through the support piece 141 and created on one outer edge of the support piece 141.

By creating the third notch 1414 on at least one of the three support pieces 141, the dimension of the second channel 140a formed between the three support pieces 141 can be increased, the infiltration rate of the electrolytic solution for the electrode assembly 120 can be increased, and in turn, the production efficiency and yield rate of the battery cell 100 are improved.

In some embodiments of this application, the three support pieces 141 are distributed apart from and in parallel with each other along the first direction; or the three support pieces 141 are distributed apart from and in parallel with each other along a second direction, and the second direction is coplanar with and perpendicular to the first direction.

This can increase the degree of freedom in assembling the support assembly 140, lower the requirement on the assembling between the support assembly 140 and the first insulator 130, improve the assembling efficiency, and in turn, improve the production efficiency of the battery cell 100.

In some embodiments of this application, as shown in FIG. 18 to FIG. 23, the support assembly 140 includes four support pieces 141. The four support pieces 141 are disposed apart along a periphery of the first insulation portion 131. The second channel 140a includes a fourth space 140a-3 jointly defined by the four support pieces 141 and a fifth space 140a-4 jointly defined by every two adjacent support pieces 141.

At least a part of the fourth space 140a-3 is disposed opposite to the first channel 130a, or at least a part of the fifth space 140a-4 is disposed opposite to the first channel 130a.

The fourth space 140a-3 may be understood as a space formed by opposite edges of the four support pieces 141 that gather around.

The fifth space 140a-4 may be understood as a space located between every two adjacent support pieces 141 and between two opposite edges.

By making the support assembly 140 include four support pieces 141 and letting the second channel 140a include the fourth space 140a-3 jointly defined by the four support pieces 141 and the fifth space 140a-4 jointly defined by every two adjacent support pieces 141, it is convenient for the electrolytic solution to enter the first channel 130a from more directions, thereby further increasing the infiltration rate of the electrolytic solution for the electrode assembly 120 and improving the production efficiency of the battery cell 100.

In some embodiments of this application, the support piece 141 assumes a plate structure to reduce the space occupied by the support assembly 140 in the housing 100, thereby increasing the capacity of the battery cell 100.

In some embodiments of this application, as shown in FIG. 3, the first insulator 130 further includes a plurality of second insulation portions 132 connected to the first insulation portion 131. The plurality of second insulation portions 132 each are folded along a line of connection at which the second insulation portion is connected to the first insulation portion 131, and gather together with the first insulation portion 131 to form a cylindrical structure opened at a top of the cylindrical structure. The cylindrical structure wraps around the electrode assembly 120. Two adjacent second insulation portions 132 are butt-jointed to or overlap each other outside the electrode assembly 120.

The second insulation portion 132 means an insulating structure connected to the first insulation portion 131 and capable of gathering together with the first insulation portion 131 to form a cylindrical structure opened at the top of the cylindrical structure. In this way, all parts other than electrode posts on the electrode assembly 120 are wrapped by the insulating structure, thereby greatly reducing the probability of contact between the electrode assembly 120 and the housing 110, and improving the safety of the battery cell 100. The second insulation portion 132 and the first insulation portion 131 may be disposed discretely or integrally. The second insulation portion 132 may assume a sheet structure.

By disposing a plurality of second insulation portions 132 connected to the first insulation portion 131, the probability of contact between the electrode assembly 120 and the housing 110 can be greatly reduced, and the safety of the battery cell 100 can be improved.

In some embodiments of this application, the first insulation portion 131 and the second insulation portion 132 are formed in one piece. This facilitates the assembling between the first insulator 130 and the electrode assembly 120 and improves the assembling efficiency.

In some embodiments of this application, as shown in FIG. 4, the second insulator 150 includes a first part 151 and a second part 152 that are formed in one piece. The first part 151 is disposed on a side of the support assembly 140 and covers the first channel 130a and a part of the second channel 140a, the side being away from the first insulation portion 131. The second part 152 covers a region of buttjoint or overlap between two adjacent second insulation portions 132 outside the electrode assembly 120.

There may be one or more first insulator 150.

The first part 151 may be an insulating structure configured to cover the first channel 130a and a part of the second channel 140a.

The second part 152 may be an insulating structure configured to cover the region of butt-joint or overlap between the two adjacent second insulation portions 132 outside the electrode assembly 120, so that the first insulator 130 can be fixed more firmly to the outside of the electrode assembly 120, thereby improving the safety of the battery cell 100.

By making the second insulator 150 include the first part 151 and the second part 152 that are formed in one piece, and by letting the first part 151 cover the first channel 130a and a part of the second channel 140a, the corrosion can be alleviated during use of the battery cell 100, and the capacity and lifespan of the battery cell 100 can be increased. With the second part 152 covering the region of butt-joint or overlap between the two adjacent second insulation portions 132 outside the electrode assembly 120, the first insulator 130 can be fixed more firmly to the outside of the electrode assembly 120, thereby improving the safety of the battery cell 100.

Based on the plurality of embodiments above, referring to FIG. 3 to FIG. 6, this application discloses a battery cell 100. The battery cell 100 includes: a housing 110, an electrode assembly 120, a first insulator 130, a support assembly 140, and a second insulator 150. The housing 110 forms an accommodation cavity. The electrode assembly 120 is accommodated in the accommodation cavity. The electrode assembly 120 includes a first electrode plate, a second electrode plate, and a separator disposed between the first electrode plate and the second electrode plate. The first electrode plate and the second electrode plate are stacked along a first direction. A first insulator 130 includes a first insulation portion 131. The first insulation portion 131 is disposed on one side of the electrode assembly 120 and parallel to the first direction. The first insulation portion 131 includes a first channel 130a that runs through the first insulation portion 131. The support assembly 140 is disposed on a side of the first insulation portion 131, the side being away from the electrode assembly 120. The support assembly 140 defines a second channel 140a that communicates the first channel 130a to the accommodation cavity. At least a part of the second channel 140a is disposed opposite to the first channel 130a. At least a part of the second insulator 150 is disposed on a side of the support assembly 140 and covers the first channel 130a and a part of the second channel 140a, the side being away from the first insulation portion 131. A dimension of the second channel 140a is larger than a dimension of the first channel 130a in a direction parallel to the first direction. The second channel 140a completely covers the first channel 130a.

In the battery cell 100 according to this embodiment of this application, the first insulation portion 131 is disposed on a side of the electrode assembly 120, and the first insulation portion 131 is parallel to a stacking direction of the first electrode plate and the second electrode plate of the electrode assembly 130. The support assembly 140 defines the second channel 140a that communicates the first channel 130a to the accommodation cavity. At least a part of the second channel 140a is disposed opposite to the first channel 130a. At least a part of the second insulator 152 covers the first channel 130a and a part of the second channel 140a. In this way, when an active material or a foreign matter is detached from the first electrode plate and/or the second electrode plate of the electrode assembly 130, the active material or foreign matter falls on the second insulator 150 instead of falling directly on the housing 110 after passing through the first channel 130a and the second channel 140a, thereby reducing the probability of short-circuits between the electrode assembly 120 and the housing 110, alleviating the corrosion during use of the battery cell 100, and increasing the capacity and lifespan of the battery cell 100. In addition, the second insulator 152 covers merely a part of the second channel 140a. An electrolytic solution in the accommodation cavity can still infiltrate the electrode assembly 120 through the second channel 140a and the first channel 130a to satisfy the infiltration requirement. By making the dimension of the second channel 140a larger than the dimension of the first channel 130a in the direction parallel to the first direction and making the second channel 140a completely cover the first channel 130a, the infiltration rate of the electrolytic solution for the electrode assembly 120 can be further increased, and the production efficiency and yield rate of the battery cell 100 can be further improved.

An embodiment in a second aspect of this application discloses a battery 11, including the battery cell 100 according to the first aspect.

The battery 11 according to this embodiment of this application includes a battery cell 100. The first insulation portion 131 of the battery cell 100 is disposed on a side of the electrode assembly 120, and the first insulation portion 131 is parallel to a stacking direction of the first electrode plate and the second electrode plate of the electrode assembly 130. The support assembly 140 defines the second channel 140a that communicates the first channel 130a to the accommodation cavity. At least a part of the second channel 140a is disposed opposite to the first channel 130a. At least a part of the second insulator 152 covers the first channel 130a and a part of the second channel 140a. In this way, when an active material or a foreign matter is detached from the first electrode plate and/or the second electrode plate of the electrode assembly 130, the active material or foreign matter falls on the second insulator 150 instead of falling directly on the housing 110 after passing through the first channel 130a and the second channel 140a, thereby reducing the probability of short-circuits between the electrode assembly 120 and the housing 110, alleviating the corrosion during use of the battery cell 100, and increasing the capacity and lifespan of the battery cell 100. In addition, the second insulator 152 covers merely a part of the second channel 140a. An electrolytic solution in the accommodation cavity can still infiltrate the electrode assembly 120 through the second channel 140a and the first channel 130a to satisfy the infiltration requirement. Evidently, the battery cell 100 of this application not only alleviates the corrosion during use of the battery cell 100, increases the capacity and lifespan of the battery cell 100, but also satisfies the infiltration requirement of the battery cell, and in turn, increases the capacity and endurance time of the battery 11, and improves the production efficiency and yield rate of the battery 11.

An embodiment in a third aspect of this application discloses an electrical device 10, including the battery cell 100 according to the first aspect.

The electrical device 10 according to this embodiment of this application uses the battery cell 100 in the first aspect as a power supply system. The first insulation portion 131 of the battery cell 100 is disposed on a side of the electrode assembly 120, and the first insulation portion 131 is parallel to a stacking direction of the first electrode plate and the second electrode plate of the electrode assembly 130. The support assembly 140 defines the second channel 140a that communicates the first channel 130a to the accommodation cavity. At least a part of the second channel 140a is disposed opposite to the first channel 130a. At least a part of the second insulator 152 covers the first channel 130a and a part of the second channel 140a. In this way, when an active material or a foreign matter is detached from the first electrode plate and/or the second electrode plate of the electrode assembly 130, the active material or foreign matter falls on the second insulator 150 instead of falling directly on the housing 110 after passing through the first channel 130a and the second channel 140a, thereby reducing the probability of short-circuits between the electrode assembly 120 and the housing 110, alleviating the corrosion during use of the battery cell 100, and increasing the capacity and lifespan of the battery cell 100. In addition, the second insulator 152 covers merely a part of the second channel 140a. An electrolytic solution in the accommodation cavity can still infiltrate the electrode assembly 120 through the second channel 140a and the first channel 130a to satisfy the infiltration requirement. Evidently, the battery cell 100 of this application not only alleviates the corrosion during use of the battery cell 100, increases the capacity and lifespan of the battery cell 100, but also satisfies the infiltration requirement of the battery cell, improves the production efficiency and yield rate of the battery cell, and in turn, increases the capacity and endurance time of the electrical device, and improves the production efficiency and yield rate of the battery cell.

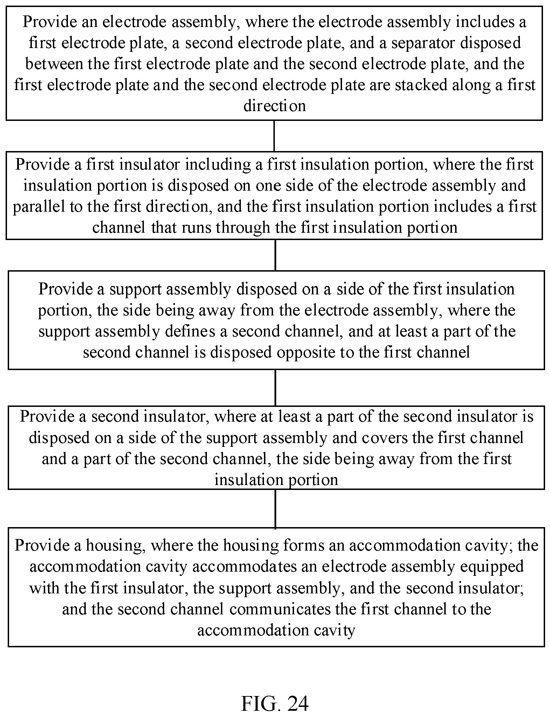

As shown in FIG. 24, an embodiment in a fourth aspect of this application discloses a method for manufacturing a battery cell, including:
providing an electrode assembly 120, where the electrode assembly 120 includes a first electrode plate, a second electrode plate, and a separator disposed between the first electrode plate and the second electrode plate, and the first electrode plate and the second electrode plate are stacked along a first direction;
providing a first insulator 130 including a first insulation portion 131, where the first insulation portion 131 is disposed on one side of the electrode assembly 120 and parallel to the first direction, and the first insulation portion 131 includes a first channel 130a that runs through the first insulation portion 131;
providing a support assembly 140 disposed on a side of the first insulation portion 131, the side being away from the electrode assembly 120, where the support assembly 140 defines a second channel 140a, and at least a part of the second channel 140a is disposed opposite to the first channel 130a;
providing a second insulator 150, where at least a part of the second insulator is disposed on a side of the support assembly 140 and covers the first channel 130a and a part of the second channel 140a, the side being away from the first insulation portion 131; and
providing a housing 110, where the housing 110 forms an accommodation cavity; the accommodation cavity accommodates an electrode assembly 120 equipped with the first insulator 130, the support assembly 140, and the second insulator 150; and the second channel 140a communicates the first channel 130a to the accommodation cavity.

In the battery cell 100 manufactured by the battery cell manufacturing method according to this embodiment of this application, the first insulation portion 131 of the battery cell 100 is disposed on a side of the electrode assembly 120, and the first insulation portion 131 is parallel to a stacking direction of the first electrode plate and the second electrode plate of the electrode assembly 130. The support assembly 140 defines the second channel 140a that communicates the first channel 130a to the accommodation cavity. At least a part of the second channel 140a is disposed opposite to the first channel 130a. At least a part of the second insulator 152 covers the first channel 130a and a part of the second channel 140a. In this way, when an active material or a foreign matter is detached from the first electrode plate and/or the second electrode plate of the electrode assembly 130, the active material or foreign matter falls on the second insulator 150 instead of falling directly on the housing 110 after passing through the first channel 130a and the second channel 140a, thereby reducing the probability of short-circuits between the electrode assembly 120 and the housing 110, alleviating the corrosion during use of the battery cell 100, and increasing the capacity and lifespan of the battery cell 100. In addition, the second insulator 152 covers merely a part of the second channel 140a. An electrolytic solution in the accommodation cavity can still infiltrate the electrode assembly 120 through the second channel 140a and the first channel 130a to satisfy the infiltration requirement. Evidently, the battery cell 100 manufactured by the battery cell manufacturing method according to this embodiment of this application not only alleviates the corrosion during use of the battery cell 100, increases the capacity and lifespan of the battery cell 100, but also satisfies the infiltration requirement of the battery cell, and improves the production efficiency and yield rate of the battery cell 100.

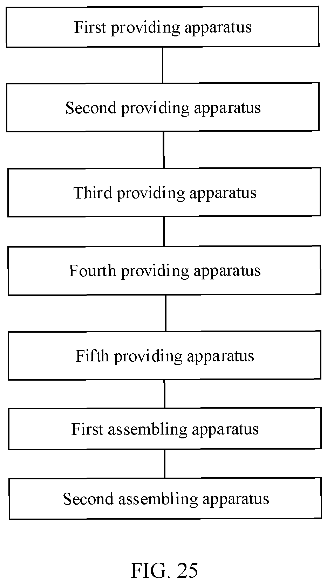

As shown in FIG. 25, an embodiment in a fifth aspect of this application discloses a piece of equipment for manufacturing a battery cell, including:
a first providing apparatus, configured to provide an electrode assembly 120, where the electrode assembly 120 includes a first electrode plate, a second electrode plate, and a separator disposed between the first electrode plate and the second electrode plate, and the first electrode plate and the second electrode plate are stacked along a first direction;
a second providing apparatus, configured to provide a first insulator 130, where the first insulator 130 includes a first insulation portion 131, and the first insulation portion 131 includes a first channel 130a that runs through the first insulation portion 131;
a third providing apparatus, configured to provide a support assembly 140;
a fourth providing apparatus, configured to provide a second insulator 150;
a fifth providing apparatus, configured to provide a housing 110, where the housing 110 forms an accommodation space;
a first assembling apparatus, configured to dispose the first insulation portion 131 on a side of the electrode assembly 120 and make the first insulation portion parallel to the first direction; dispose the support assembly 140 on a side of the first insulation portion 131, the side being away from the electrode assembly 120, where the support assembly 140 defines a second channel 140a, and at least a part of the second channel 140a is disposed opposite to the first channel 130a; and dispose at least a part of the second insulator 150 on a side of the support assembly 140 and make the at least part of the second insulator cover the first channel 130a and a part of the second channel 140a, the side being away from the first insulation portion 131; and
a second assembling apparatus, configured to let the accommodation cavity accommodate the electrode assembly 120 equipped with the first insulator 130, the support assembly 140, and the second insulator 150, where the second channel 140a communicates the first channel 130a to the accommodation cavity.

In the battery cell 100 manufactured by the battery cell manufacturing equipment according to this embodiment of this application, the first insulation portion 131 of the battery cell 100 is disposed on a side of the electrode assembly 120, and the first insulation portion 131 is parallel to a stacking direction of the first electrode plate and the second electrode plate of the electrode assembly 130. The support assembly 140 defines the second channel 140a that communicates the first channel 130a to the accommodation cavity. At least a part of the second channel 140a is disposed opposite to the first channel 130a. At least a part of the second insulator 152 covers the first channel 130a and a part of the second channel 140a. In this way, when an active material or a foreign matter is detached from the first electrode plate and/or the second electrode plate of the electrode assembly 130, the active material or foreign matter falls on the second insulator 150 instead of falling directly on the housing 110 after passing through the first channel 130a and the second channel 140a, thereby reducing the probability of short-circuits between the electrode assembly 120 and the housing 110, alleviating the corrosion during use of the battery cell 100, and increasing the capacity and lifespan of the battery cell 100. In addition, the second insulator 152 covers merely a part of the second channel 140a. An electrolytic solution in the accommodation cavity can still infiltrate the electrode assembly 120 through the second channel 140a and the first channel 130a to satisfy the infiltration requirement. Evidently, the battery cell manufactured by the battery cell manufacturing equipment according to this embodiment of this application not only alleviates the corrosion during use of the battery cell 100, increases the capacity and lifespan of the battery cell 100, but also satisfies the infiltration requirement of the battery cell, and improves the production efficiency and yield rate of the battery cell 100.

The foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

It is hereby noted that the relational terms herein such as first and second are used only to differentiate an entity or operation from another entity or operation, and do not require or imply any actual relationship or sequence between the entities or operations. Moreover, the terms "include", "comprise", and any variation thereof are intended to cover a non-exclusive inclusion relationship in which a process, method, object, or device that includes or comprises a series of elements not only includes such elements, but also includes other elements not expressly specified or also includes inherent elements of the process, method, object, or device. Unless otherwise specified in the context, reference to a process, method, object, or device that "includes" or "comprises" a specific number of elements does not exclude other identical or equivalent elements existent in the process, method, object, or device.

Different embodiments of this application are described in a correlative manner. For the same or similar part in one embodiment, reference may be made to another embodiment. Each embodiment focuses on differences from other embodiments.

What is described above is merely preferred embodiments of this application, but not intended to limit the protection scope of this application. Any and all modifications, equivalent replacements, improvements, and the like made without departing from the spirit and principles of this application still fall within the protection scope of this application.

## Claims

1. A battery cell (100), comprising:
a housing (110), forming an accommodation cavity;
an electrode assembly (120), accommodated in the accommodation cavity, wherein the electrode assembly (120) comprises a first electrode plate, a second electrode plate, and a separator disposed between the first electrode plate and the second electrode plate, and the first electrode plate and the second electrode plate are stacked along a first direction;
a first insulator (130), comprising a first insulation portion (131), wherein the first insulation portion (131) is disposed on one side of the electrode assembly (120) and parallel to the first direction, and the first insulation portion (131) comprises a first channel (130a) that runs through the first insulation portion (131);
a support assembly (140), disposed on a side of the first insulation portion (131), the side being away from the electrode assembly (120), wherein the support assembly (140) defines a second channel (140a) that communicates the first channel (130a) to the accommodation cavity, and at least a part of the second channel (140a) is disposed opposite to the first channel (130a); and
a second insulator (150), wherein at least a part of the second insulator is disposed on a side of the support assembly (140) and covers the first channel (130a) and a part of the second channel (140a), the side being away from the first insulation portion (131).

2. The battery cell (100) according to claim 1, wherein a dimension of the second channel (140a) is larger than a dimension of the first channel (130a) in a direction parallel to the first direction.

3. The battery cell (100) according to claim 2, wherein the second channel (140a) completely covers the first channel (130a).

4. The battery cell (100) according to any one of claims 1 to 3, wherein the support assembly (140) comprises a support piece (141), the second channel (140a) comprises a conduit (1411) created on the support piece (141), and at least a part of the conduit (1411) is disposed opposite to the first channel (130a).

5. The battery cell (100) according to claim 4, wherein the second channel (140a) further comprises a first notch (1412) created on the support piece (141), and the first notch (1412) communicates with the conduit (1411).

6. The battery cell (100) according to any one of claims 1 to 3, wherein the support assembly (140) comprises at least two support pieces (141), and the second channel (140a) is formed between the at least two support pieces (141).

7. The battery cell (100) according to claim 6, wherein the support assembly (140) comprises two support pieces (141); the two support pieces (141) are disposed apart on a side of the first insulation portion (131), the side being away from the electrode assembly (120); the second channel (140a) comprises a second space (140a-1) defined between the two support pieces (141); and at least a part of the second space (140a-1) is disposed opposite to the first channel (130a).

8. The battery cell (100) according to claim 7, wherein the second channel (140a) further comprises a second notch (1413), the second notch (1413) is created on at least one of the two support pieces (141), and the second notch (1413) communicates with the second space (140a-1).

9. The battery cell (100) according to claim 7 or 8, wherein the two support pieces (141) are distributed apart in parallel along the first direction; or
the two support pieces (141) are distributed apart in parallel along a second direction, and the second direction is coplanar with and perpendicular to the first direction.

10. The battery cell (100) according to claim 6, wherein the support assembly (140) comprises three support pieces (141) disposed on a side of the first insulation portion (131), the side being away from the electrode assembly (120); the three support pieces (141) are distributed apart from each other; the second channel (140a) comprises a third space (140a-2) defined between every two adjacent support pieces (141); and at least a part of each third space (140a-2) communicates with the first channel (130a).

11. The battery cell (100) according to claim 10, wherein the second channel (140a) further comprises a third notch (1414), the third notch (1414) is created on at least one of the three support pieces (141), and the third notch (1414) communicates with the third space (140a-2).

12. The battery cell (100) according to claim 10 or 11, wherein the three support pieces (141) are distributed apart from and in parallel with each other along the first direction; or
the three support pieces (141) are distributed apart from and in parallel with each other along a second direction, and the second direction is coplanar with and perpendicular to the first direction.

13. The battery cell (100) according to claim 6, wherein the support assembly (140) comprises four support pieces (141); the four support pieces (141) are disposed apart along a periphery of the first insulation portion (131); and the second channel (140a) comprises a fourth space (140a-3) jointly defined by the four support pieces (141) and a fifth space (140a-4) jointly defined by every two adjacent support pieces (141), wherein
at least a part of the fourth space (140a-3) is disposed opposite to the first channel (130a), or at least a part of the fifth space (140a-4) is disposed opposite to the first channel (130a).

14. The battery cell (100) according to any one of claims 4 to 13, wherein the support piece (141) assumes a plate structure.

15. The battery cell (100) according to any one of claims 1 to 14, wherein the first insulator (130) further comprises a plurality of second insulation portions (132) connected to the first insulation portion (131); the plurality of second insulation portions (132) each are folded along a line of connection at which the second insulation portion is connected to the first insulation portion (131), and gather together with the first insulation portion (131) to form a cylindrical structure opened at a top of the cylindrical structure; the cylindrical structure wraps around the electrode assembly (120); and two adjacent second insulation portions (132) are butt-jointed to or overlap each other outside the electrode assembly (120).

16. The battery cell (100) according to claim 15, wherein the first insulation portion (131) and the second insulation portion (132) are formed in one piece.

17. The battery cell (100) according to claim 15, wherein the second insulator (150) comprises a first part (151) and a second part (152) that are formed in one piece; the first part (151) is disposed on a side of the support assembly (140) and covers the first channel (130a) and a part of the second channel (140a), the side being away from the first insulation portion (131); and the second part (152) covers a region of buttjoint or overlap between two adjacent second insulation portions (132) outside the electrode assembly (120).

18. Abattery, comprising the battery cell (100) according to any one of claims 1 to 17.

19. An electrical device, comprising the battery cell (100) according to any one of claims 1 to 17.

20. A method for manufacturing a battery cell, comprising:
providing an electrode assembly (120), wherein the electrode assembly (120) comprises a first electrode plate, a second electrode plate, and a separator disposed between the first electrode plate and the second electrode plate, and the first electrode plate and the second electrode plate are stacked along a first direction;
providing a first insulator (130) comprising a first insulation portion (131), wherein the first insulation portion (131) is disposed on one side of the electrode assembly (120) and parallel to the first direction, and the first insulation portion (131) comprises a first channel (130a) that runs through the first insulation portion (131);
providing a support assembly (140) disposed on a side of the first insulation portion (131), the side being away from the electrode assembly (120), wherein the support assembly (140) defines a second channel (140a), and at least a part of the second channel (140a) is disposed opposite to the first channel (130a);
providing a second insulator (150), wherein at least a part of the second insulator is disposed on a side of the support assembly (140) and covers the first channel (130a) and a part of the second channel (140a), the side being away from the first insulation portion (131); and
providing a housing (110), wherein the housing (110) forms an accommodation cavity; the accommodation cavity accommodates an electrode assembly (120) equipped with the first insulator (130), the support assembly (140), and the second insulator (150); and the second channel (140a) communicates the first channel (130a) to the accommodation cavity.

21. A piece of equipment for manufacturing a battery cell, comprising:
a first providing apparatus, configured to provide an electrode assembly (120), wherein the electrode assembly (120) comprises a first electrode plate, a second electrode plate, and a separator disposed between the first electrode plate and the second electrode plate, and the first electrode plate and the second electrode plate are stacked along a first direction;
a second providing apparatus, configured to provide a first insulator (130), wherein the first insulator (130) comprises a first insulation portion (131), and the first insulation portion (131) comprises a first channel (130a) that runs through the first insulation portion (131);
a third providing apparatus, configured to provide a support assembly (140);
a fourth providing apparatus, configured to provide a second insulator (150);
a fifth providing apparatus, configured to provide a housing (110), wherein the housing (110) forms an accommodation space;
a first assembling apparatus, configured to dispose the first insulation portion (131) on a side of the electrode assembly (120) and make the first insulation portion parallel to the first direction; dispose the support assembly (140) on a side of the first insulation portion (131), the side being away from the electrode assembly (120), wherein the support assembly (140) defines a second channel (140a), and at least a part of the second channel (140a) is disposed opposite to the first channel (130a); and dispose at least a part of the second insulator (150) on a side of the support assembly (140) and make the at least part of the second insulator cover the first channel (130a) and a part of the second channel (140a), the side being away from the first insulation portion (131); and
a second assembling apparatus, configured to let the accommodation cavity accommodate the electrode assembly (120) equipped with the first insulator (130), the support assembly (140), and the second insulator (150), wherein the second channel (140a) communicates the first channel (130a) to the accommodation cavity.
